# EUROPEAN PATENT APPLICATION

(11) **EP 3 136 337 A1**
(43) Date of publication of application: **01.03.2017**
(21) Application number: 16184756.1
(22) Date of filing: 18.08.2016
(51) Int. Cl.: G06Q 50/06

(54) **ANALYSIS ENGINE THAT CORRELATES BUSINESS OPERATIONS WITH FACILITY ENERGY USE**

(30) Priority: 25.08.2015 US 201514834642
(71) Applicant: Schneider Electric USA Inc., Andover, MA 01810-1067 (US)
(72) Inventor: WALL, Daniel J, Saanichton, BC V8M 1S7 (CA); VAN GORP, John C, Sidney, BC V8L 4J6 (CA)
(74) Representative: Hayden, Nicholas Mark

(57) **Abstract**

An energy analysis engine is configured to receive data from information technology (IT) systems of the facility related to the one or more of input energy use, energy driver, and/or control parameters for equipment at the facility find correlations between the input parameters of energy use, energy drivers, and control parameters of the equipment and develop one or more energy models predicting energy use of the equipment based on the energy drivers and control parameters, compare the data received from the IT systems to the one or more models to determine if an energy system anomaly has occurred, and output control signals to control operation of the equipment responsive to a determination that an energy system anomaly has occurred.

## Description

### BACKGROUND

### 1. Field of Invention

Aspects and embodiments of the present disclosure are directed to systems and methods for providing energy management services.

### 2. Discussion of Related Art

Energy models of businesses or facilities may be utilized to compare expected versus actual energy consumption to determine if an energy system anomaly is present. Existing energy modeling methods perform well when all energy drivers are accounted for and there are no unexpected changes in business operations. Most businesses, however, experience numerous unexpected events which can impact energy consumption, and accounting for all energy drivers is difficult.

### SUMMARY

In accordance with an aspect of the present disclosure, there is provided a system comprising an analysis engine including at least one input and at least one output. The analysis engine is configured to create instances of predefined model templates to model the activity of energy equipment in a facility, different equipment types being represented by different templates, the templates defining one or more of input energy use, energy drivers, and/or control parameters for the respective equipment types, receive, through the at least one input, data from other information technology (IT) systems of the facility related to the one or more of input energy use, energy driver, and/or control parameters for the respective equipment types, find correlations between the input parameters of energy use, energy drivers, and control parameters of the different equipment types and develop one or more energy models predicting energy use of the different equipment types based on the energy drivers and control parameters, compare the data received from the other IT systems and energy consumption of the energy equipment to the one or more models to determine if an energy system anomaly has occurred, and output, through the at least one output, one or more control signals to control operation of the energy equipment responsive to a determination that an energy system anomaly has occurred.

In some embodiments, the analysis engine is configured to flag an instance of an event not predicted by the one or more models and present an indication of correlations between energy use of equipment associated with the event and the energy drivers and control parameters of the equipment to a user. The analysis engine may be configured to receive feedback from the user that (a) confirms whether or not the correlations presented are valid; and (b) steps the analysis engine should take to account for the event. The steps the analysis engine should take may include one of adjusting the model for the equipment for just the instance of the event and updating the model for the equipment to indicate a permanent change to the correlations between the energy use of equipment and the energy drivers and control parameters of the equipment based on data associated with the instance of the event.

In some embodiments, the analysis engine is configured to suggest actions to bring equipment operation back into a range predicted by the one or more models and to receive input from the user accepting or declining implementation of the actions.

In some embodiments, the analysis engine is configured to output one or more signals through the one or more outputs that implement one or more actions to bring equipment operation back into a range predicted by the one or more models responsive to detecting an instance of an event not predicted by the one or more models.

In some embodiments, the analysis engine is configured, after initial installation, to enter a training phase in which it queries a network of the facility to determine the different equipment types present in the facility and the other IT systems present in the facility.

In some embodiments, the analysis engine is configured to receive data from the internet including one or more of weather, financial, and security related data, and to incorporate the data from the internet into the one or more energy models.

In some embodiments, the analysis engine is configured to receive data from one or more temperature and/or lighting sensors of the facility and to incorporate the data from the one or more temperature and/or lighting sensors into the one or more energy models.

In some embodiments, the other IT systems of the facility include one or more of an enterprise resource planning systems, a calendar service, an energy monitoring system, a manufacturing execution system, a data center infrastructure management system, a finance system, a supervisory control and data acquisition system, a customer relationship management system, a transportation management system, a human resource system, and an enterprise asset management system.

In some embodiments, the system further comprises a second analysis engine associated with a second facility and in communication with the analysis engine, the analysis engine and the second analysis engine configured to cooperate to determine actions to improve operation of the energy equipment.

In some embodiments, the analysis engine is further configured to predict future energy system anomalies and take action to prevent the future energy system anomalies.

In accordance with an aspect of the present disclosure, there is provided a method comprising installing an energy analysis engine in a computer system in communication with a facility network. The energy analysis engine is configured to identify one or more enterprise systems installed on the network, access data feeds from the one or more enterprise systems, identify one or more facility energy driver parameters represented in the data feeds from the one or more enterprise systems, build an energy model correlating the one or more facility energy driver parameters with facility energy consumption, and provide one or more control commands to the one or more enterprise systems responsive to a detected change in a correlation between the one or more facility energy driver parameters and the facility energy consumption, the one or more control commands causing an adjustment to be made to one or more operating parameters of one or more energy consuming and/or producing devices at the facility.

In some embodiments, the energy analysis engine accesses one or more data feeds from the internet that are relevant to the facility energy consumption and incorporates correlations between energy driver parameters represented in the one or more data feeds from the internet and the facility energy consumption into the energy model.

In some embodiments, the energy analysis engine requests a user to validate one or more correlations between the one or more facility energy driver parameters and the facility energy consumption.

In some embodiments, a user manually links the energy analysis engine to one or more additional enterprise systems and the energy analysis engine incorporates correlations between energy driver parameters represented one or more data feeds from the one or more additional enterprise systems and the facility energy consumption into the energy model.

In some embodiments, the energy analysis engine updates the energy model in response to a change in a determined correlation between the one or more facility energy driver parameters and the facility energy consumption and automatically updates the one or more operating parameters of the one or more energy consuming and/or producing devices at the facility responsive to the update to the energy model.

In some embodiments, the energy analysis engine highlights unexpected changes in facility energy use to a user of the facility.

In some embodiments, the energy analysis engine automatically discovers new energy consumption drivers for the facility energy consumption and automatically incorporates the new energy consumption drivers into the energy model.

In some embodiments, the energy analysis engine monitors one of a security system and a calendar service of the facility and provides the one or more control commands response to a determination of a change in an occupancy pattern of the facility based on data from the one of the security system and the calendar service.

In some embodiments, the energy analysis engine communicates and cooperates with a second analysis engine associated with a second facility to determine actions to improve operation of the one or more energy consuming and/or producing devices.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a schematic illustration of an embodiment of an energy management system;
FIG. 2 is a flow chart of an embodiment of a method of commissioning an energy analysis engine;
FIG. 3 is a schematic illustration of an embodiment of an energy management system;
FIG. 4 is a schematic illustration of an embodiment of an improved energy management system;
FIG. 5 is a schematic illustration of another embodiment of an improved energy management system;
FIG. 6 is a schematic illustration of a computer system upon which methods disclosed herein may be performed; and
FIG. 7 is a schematic illustration of a memory system for the computer system of FIG. 6.

### DETAILED DESCRIPTION

This disclosure is not limited in its application to the details of construction and the arrangement of components set forth in the following description or illustrated in the drawings. The disclosed systems and methods are capable of other embodiments and of being practiced or of being carried out in various ways. Also, the phraseology and terminology used herein is for the purpose of description and should not be regarded as limiting. The use of "including," "comprising," "having," "containing," "involving," and variations thereof herein is meant to encompass the items listed thereafter and equivalents thereof as well as additional items.

Various aspects and embodiments disclosed herein include systems and methods for providing energy management services. Aspects and embodiments disclosed herein include an analysis and control engine (also referred to herein as an "analysis engine" "energy analysis engine," or simply an "engine") that captures relationships between business operations and facility energy systems and is capable of initiating actions to adjust operating parameters of facility energy systems as needed. The analysis engine highlights unexpected changes in facility energy use and helps users adjust energy models as required. In some embodiments, the analysis engine automates the discovery and incorporation of new energy consumption drivers or changes to known energy consumption drivers into an energy model for a business or facility. The analysis engine may adjust operating parameters of one or more facility energy systems based on adjustments made to an energy model for the facility.

A typical facility uses multiple different software systems to run the enterprise. Anyone who is trying to manage the enterprise must deal with many different, siloed data sets. Managers often want to use data from one system to provide business context for data from another system. However, data exchange between these software systems is typically manual and requires constant maintenance and interpretation by humans.

Changes to business processes in a facility can have an impact on energy consumption patterns in the facility. It is therefore desirable for an energy manager or facility manager to be aware of business processes changes so that they can forecast and manage the energy usage effectively. In presently known facilities, however, it is typically an overly manual, complex task for an energy or facility manager to keep track of all business process changes or events and their impact on energy usage. There is no single system that can understand the current state of the enterprise as a whole to provide decision support.

Aspects and embodiments disclosed herein are directed to a system and method for building and operating an analysis engine that captures relationships between business operations and facility energy use. Embodiments of the analysis engine highlight unexpected changes in facility energy use and help users adjust energy models as required. Embodiments of the analysis engine also make dynamic adjustments to the information technology (IT) systems that control energy utilizing and/or producing equipment based on the relationships discovered between business operations and facility energy use.

In some embodiments, a model of a business process or operations of a facility is built in an emergent fashion, linking the model variables to data from existing enterprise software systems that are already running. Once it is stable, the model can correlate changes in business process with changes in energy consumption (or production). It can validate those correlations with a human, or if the confidence level is high enough, it can bypass the human validation. In at least some implementations, the model and the engine behind it replace the need for most human oversight, making decisions without human intervention.

In one embodiment of an energy analysis engine, a semantic data framework is created that describes the variety of data types that the engine may receive from other IT systems. This framework focuses on data types that may be correlated with facility energy use. This framework, for example, may define types such as temperature, equipment status (ON and OFF), occupancy, and production output.

The facility is defined in terms of one or more objects, as is the relationship between the defined objects. As an example, one object may represent the entire facility, and that object is defined as containing a Heating, Ventilation, and Air Conditioning (HVAC) object, a production object, and an office object. These objects can be linked to metadata associated with data types defined by the semantic data framework. The HVAC object previously mentioned, for example, may be linked to data streams tagged as [temperature], [outdoor], and [occupancy].

In some embodiments, data streams are received by the analysis engine from a variety of business operations IT systems. Examples of such IT systems include building management systems (BMS), human resources (HR), building security, enterprise asset management (EAM), material requirements planning (MRP), etc. Data streams are either explicitly tagged with terms recognized by the semantic data framework or inferred from metadata associated with each data stream.

One or more models of facility energy use are defined in terms of the predefined facility objects. The engine compares measured energy consumed or produced vs. predicted energy consumption or production for each facility object, looking for a difference that exceeds predetermined bounds. Such events are flagged and the engine uses machine learning techniques to seek correlations between received data streams and the predicted energy use for the facility object. Data stream metadata is used by the machine learning techniques to help find correlations.

The engine presents a user with information about the flagged energy use event and correlations discovered. The user tags the correlations as either valid, not valid, or unknown, and indicates whether the flagged event is an exception or represents a permanent change in facility object energy use. If the event is an exception, the engine either uses the valid correlations to adjust the energy model for that single event or tags the energy model output for the event as not applicable (N/A) to the model. If the event indicates a permanent change, the engine uses the valid correlations to adjust the facility object energy model.

The engine maintains original and adjusted facility object energy models over time, using the correct model when providing facility energy use reports to users.

In one embodiment, a facility utilizing an analysis engine as disclosed herein includes physical sensors (for example, temperature or light sensors) that feed data related to facility energy use to business operations systems, energy equipment (for example, HVAC units), building operations systems (for example, a BMS and/or calendar service) that capture data related to facility energy use and control energy equipment that increase or decrease facility energy use, and an analysis engine which implements instances of energy model templates to create energy models that accept input from building operations systems, discover the relationship between business operations and facility energy use, and output control signals to the building operations systems to dynamically control energy equipment.

In some embodiments, inputs provided to the analysis engine from various building operations systems may be scalar numeric values, for example, temperature, time, or a number of employees present in a facility. In some embodiments, inputs provided to the analysis engine from various building operations systems may be more complex than single numeric values. For example, input values may be accompanied by a timestamp and other attributes such as confidence interval or estimated error. The analysis engine may take these additional input parameter attributes into account when creating models, looking for correlations, and generating predictions. Inputs received by the analysis engine can also include an indication of the error or confidence in the values received.

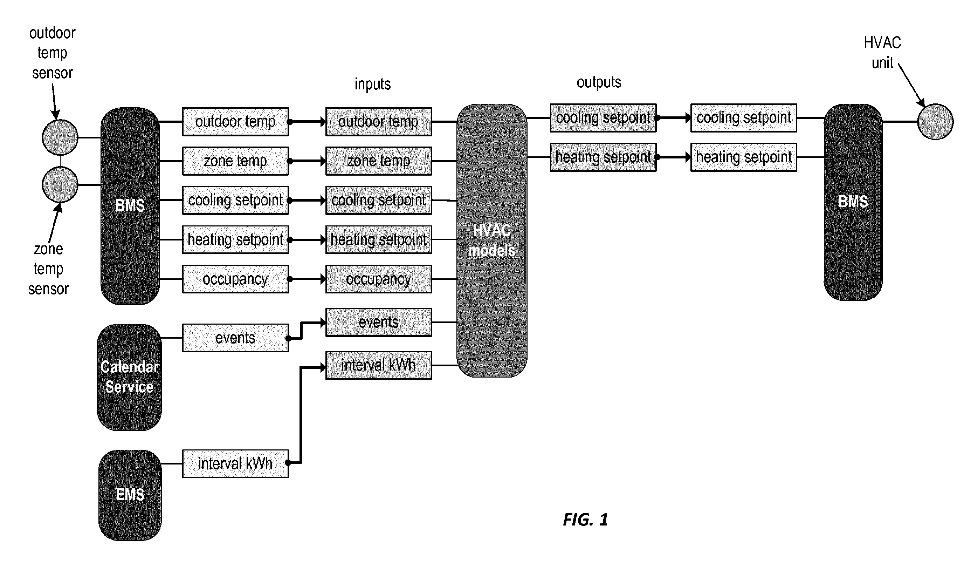

FIG. 1 illustrates an example of the connection between the system components described above. The analysis engine implements an instance of an energy model template for an energy system, such as the ensemble of energy models for the HVAC system shown in FIG. 1. A template specifies the kind of data that the model collection may receive from business operations systems (for example, temperature) and the control signals the model collection will output to business operations systems (for example, setpoint levels). In this example, several inputs of the HVAC model collection are connected to the associated output from the building management system (BMS) and one input is connected to a calendar service that lists scheduled events at the facility. The HVAC model collection also receives interval energy measurements related to the HVAC system from the energy monitoring system (EMS). The HVAC model collection outputs include heating and cooling setpoint values, and these outputs are connected to the BMS to dynamically adjust the heating and cooling setpoints used by the BMS.

Business operations systems will often be connected to physical sensors to receive data about the environment within and outside the facility, as well as to energy equipment such as lighting and space heating/cooling. In this example, the BMS receives temperature data from an outdoor temperature sensor and an indoor temperature sensor for a specific zone within the office building. The BMS is also connected to an HVAC unit which can provide heating and cooling to the zone within the office building.

Upon initially being configured as shown in FIG. 1, the HVAC model component enters a training phase. The model receives data from the BMS and calendar service systems and attempts to find correlations as defined by the logic in the template used to create the model. In this example, the types of inputs may be broadly classified as follows:
- Energy use parameters (for example, kWh, BTU, kW demand and power factor);
- Potential energy driver parameters (for example, temperature and scheduled events), and
- Energy system control parameters (for example, the heating and cooling setpoints).

The HVAC model component logic attempts to find correlations between energy use and potential energy drivers, and use these correlations to build one or more energy models. This logic also incorporates values of the energy system control parameters in constructing models, potentially creating different models for different control parameter values. In this example, assume it is summer and the heating setpoint is not used. The analysis engine notices that the cooling setpoint is set to a comfortable level during office hours and a warmer level during non-office hours, and creates one model for office hours and another model for non-office hours.

After the training phase is complete, the HVAC model component receives energy use and energy driver data and compares the actual energy use against the modeled energy use. As differences between actual and modeled energy use occur, the analysis engine attempts to find changes in the energy driver and energy system control parameters that are correlated with this difference. The analysis engine presents a user with information about the flagged energy use event and correlations discovered. The user tags the correlations as either valid, not valid, or unknown, and indicates whether the flagged event is an exception or represents a permanent change in facility energy use. If the event is an exception, the engine either uses the valid correlations to adjust the energy model for that single event or tags the energy model output for the event as N/A. If the event indicates a permanent change, the engine uses the valid correlations to adjust one or more models in the HVAC model component.

In addition to flagging exceptions and adjusting energy models based on user feedback, embodiments of the analysis engine have the ability to make changes to office building energy systems operation. In the example shown in FIG. 1, the HVAC model component has outputs that can dynamically adjust the heating and cooling setpoints used by the BMS. The analysis engine determines the energy system control parameters required to maintain energy use close to that predicted by the energy models developed and adjusts those output parameters as required. When presenting the user with information about flagged energy use events, the service may also suggest action(s) it can take to mitigate future, similar events and in some instances, implement the action(s).

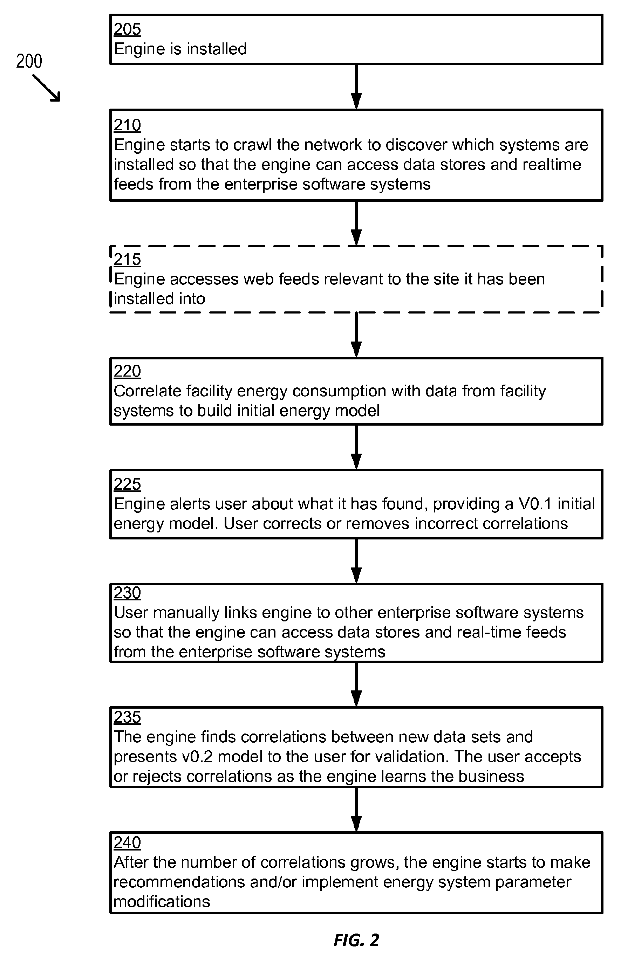

An example of a method of commissioning an analysis engine as disclosed herein is illustrated in the flowchart of FIG. 2, indicated generally at 200. In act 205, the analysis engine is installed. The analysis engine may be installed as software on an existing computer system at a facility, for example, as part of a BMS, or may be installed on a dedicated system. In some embodiments, the analysis system may be installed on a server or other computer system located outside of a customer's facility, for example, in a facility operated by an energy management system vendor of the customer and in communication with the various IT systems at the customer's facility.

In act 210, the analysis engine queries the network of IT systems at the facility to discover what enterprise software systems are present and available to provide data to the analysis engine. The analysis engine establishes data links with the discovered systems by, for example, publishing an application programming interface (API) that the enterprise software systems can conform to, or by accessing existing data stores in the enterprise software systems and using artificial intelligence techniques to determine the format, nature, and meaning of the contents of the data stores. The analysis engine may optionally also access the internet or another source of data, for example, web feeds regarding weather, finance data or business conditions, demographic changes, crime statistics, etc. relevant to the site it has been installed into or has been tasked to analyze (act 215).

In act 220, the analysis engine begins to construct a model correlating data from the various systems discovered in act 210 and/or the source of data accessed in act 215 with energy consumption at various portions of the facility and/or for the facility as a whole. The energy consumption data may be acquired from, for example, one or more energy management systems of the facility that may have been discovered by the analysis engine in act 210.

In act 225, the analysis engine alerts a user, for example, an energy manager of the facility about what it has found, providing an initial energy model. The user reviews the initial energy model and corrects or removes incorrect correlations.

In act 230, the user manually links the analysis engine to other relevant enterprise software systems, if any, that the analysis engine may have failed to discover in acts 210 or 215 so that the analysis engine can access data stores and real-time feeds from these additional enterprise software systems. As used herein the term "manually links" refers to creating a data connection, for example, by providing a network address or IP address and/or communications format or data format for one device to another device so that the devices can communicate.

In act 235, the analysis engine finds correlations between new data sets from the other enterprise software systems connected in act 230 and energy consumption at portions of the facility and/or the facility as a whole and presents a revised energy model to the user for validation. The user accepts or rejects correlations as the engine discovers potentially valid associations between facility energy consumption and data from the connected enterprise software systems. Over time, the analysis engine may continue to monitor facility energy consumption and revise correlations between the energy consumption and data received from the various enterprise software systems. The analysis engine may periodically, or upon a request from the user, present the user with an updated energy model for the user to verify or correct. As the energy model is further refined and the user becomes more confident in the model, the analysis engine begins to provide recommendations for modifications to facility energy system parameters to the user, and/or to implement such modifications automatically without human intervention (act 240).

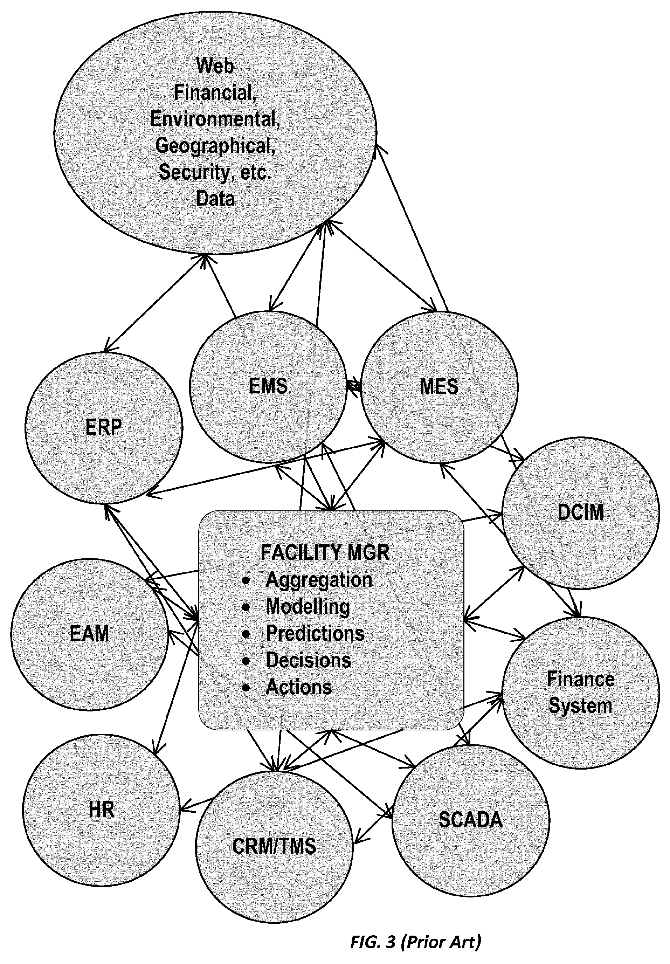

FIGS. 3-5 illustrate the evolution of energy system management of a facility upon implementation of an analysis engine as disclosed herein. FIG. 3 represents a facility prior to the commissioning of an analysis engine as disclosed herein. In the facility represented in FIG. 3, a facility manager or energy manager is responsible for monitoring the various different systems within the facility that may have a bearing on energy consumption of the facility. As illustrated in FIG. 3, these systems may include, for example, enterprise resource planning systems (ERP), energy monitoring systems (EMS), manufacturing execution systems (MES), data center infrastructure management systems (DCIM), finance systems, supervisory control and data acquisition systems (SCADA), customer relationship management systems (CRM), transportation management systems (TMS), human resource systems (HR), and/or enterprise asset management systems (EAM). The facility manager or energy manager may also be responsible for monitoring information from other sources, for example, the internet. This additional information may be related to, for example, financial, environmental, geographical, and/or security data or other data relevant to the operation or energy consumption of the facility. The facility manager or energy manager is responsible for aggregating the data from the various systems and other sources of information, modeling the facility energy consumption by, for example, determining correlations between any of the collected data or information and facility energy consumption, making predictions of facility energy consumption based on the collected data or information, and making decisions regarding actions to be taken related to the facility energy systems, for example, to modify one or more operating parameters or commission or decommission one or more systems based on the analysis and predictions based on the collected data or information.

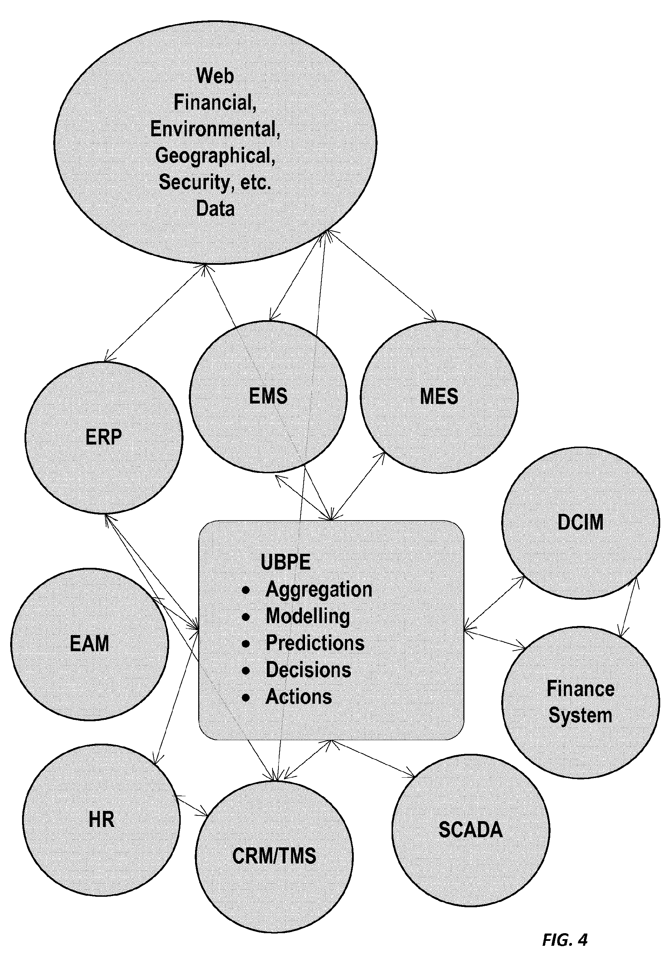

FIG. 4 represents the facility after implementation of an energy analysis engine as disclosed herein, as part of a universal business process engine (UBPE) of the facility. In FIG. 4, the analysis engine has replaced or supplemented the facility manager or energy manager to monitor the various internal and external data sources illustrated to model, make predictions, and make decisions and implement actions based on the data and information collected from the various sources.

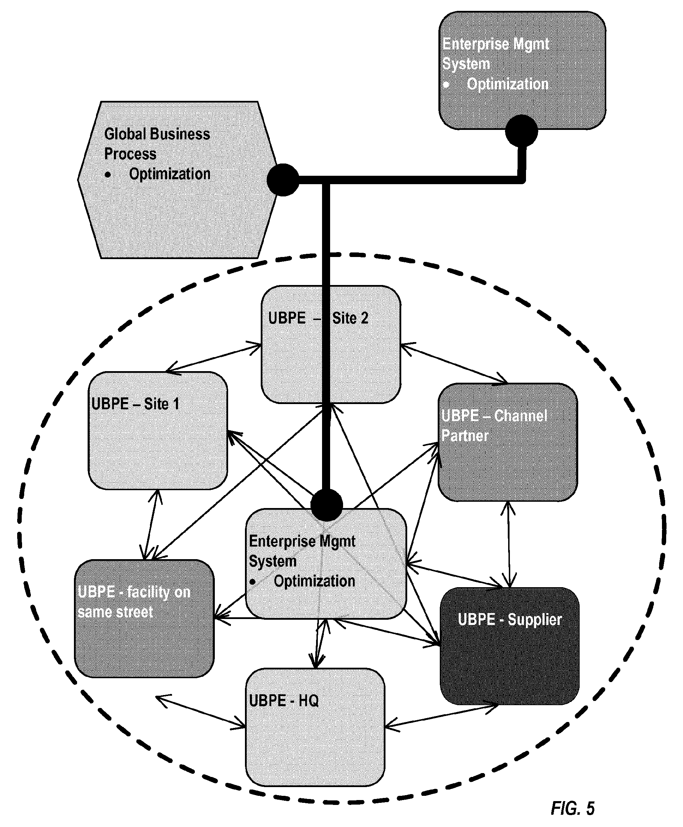

FIG. 5 represents an evolution of a business or organization including the facility. In FIG. 5, the energy analysis systems included in UBPEs of various facilities of the business or organization are linked to one another and to those of suppliers, channel partners or customers, and/or a headquarters of the business or organization. One or more enterprise management systems or global business process management systems may collect data from each of the connected energy analysis systems/UBPEs to optimize decision making across the business or organization, for example, to allocate production to different facilities based on data gathered from the various energy analysis systems/UBPEs or to adjust or reallocate quantities of materials ordered from various vendors based on data gathered from the various energy analysis systems/UBPEs.

### Computer System:

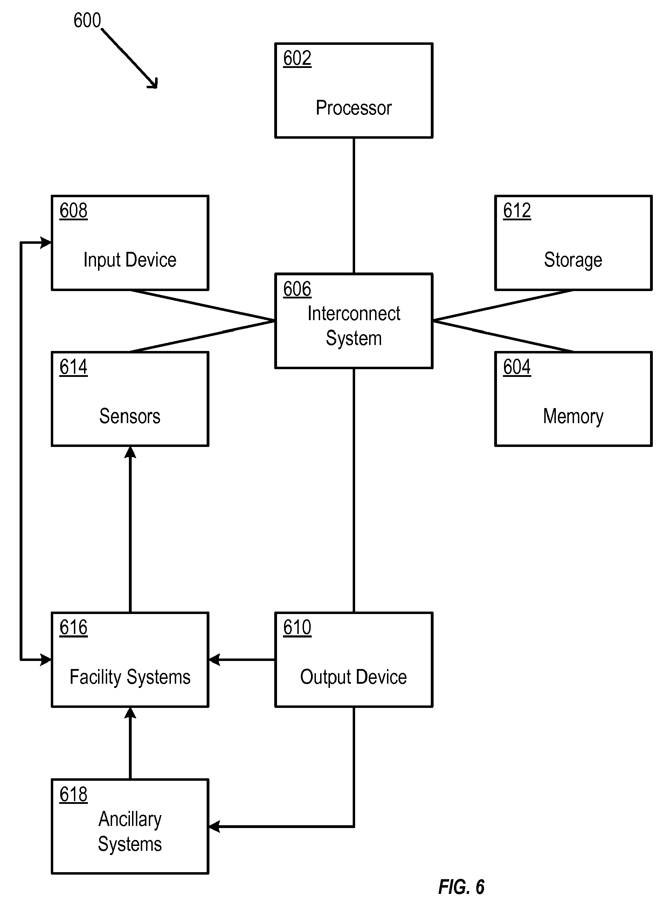

In some embodiments, one or more of the methods disclosed herein may be implemented on a computerized control system. Various aspects may be implemented as specialized software executing in a general-purpose or specialized computer system 600 such as that shown in FIG. 6. The computer system 600 may include a processor 602 connected to one or more memory devices 604, such as a disk drive, solid state memory, or other device for storing data. Memory 604 is typically used for storing programs and data during operation of the computer system 600.

Components of computer system 600 may be coupled by an interconnection mechanism 606, which may include one or more busses (e.g., between components that are integrated within a same machine) and/or a network. The interconnection mechanism 606 enables communications (e.g., data, instructions) to be exchanged between system components of system 600. Computer system 600 includes one or more input devices 608, for example, a keyboard, mouse, trackball, microphone, or touch screen through which an operator may issue commands or programming to the system 600. In some embodiments the computer system 600 may include or be coupled to or in communication with one or more input devices 608 configured to communicate with facility systems 616 of a facility, for example, one or more production systems or any other system that consumes or produces energy, or a computer system at a facility including data related to the power consumption and/or production of the facility systems 616 and read such data from the facility systems 616 and/or computer system at the facility. Computer system 600 includes one or more output devices 610, for example, a printing device, display screen, and/or speaker. In some embodiments, the computer system 600 may include or be coupled to or in communication with one or more output devices 610 configured to provide control signals to adjust one or more operating parameter of facility systems 616 of a facility and/or ancillary equipment 618 associated with the facility systems 616. One or more sensors 614 may also provide input to the computer system 600. These sensors may include, for example, sensors which are capable of or configured to measure one or more parameters of power delivered to or consumed by facility systems 616 of a facility, for example, power meters or monitors, or environmental sensors, for example, temperature sensors or light sensors. In addition, computer system 600 may contain one or more interfaces (not shown) that connect computer system 600 to a communication network in addition or as an alternative to the interconnection mechanism 606. These interfaces may be utilized by the central processing unit to collect data, for example, energy consumption and production data from one or more production entities at a customer's facility or data regarding same stored in a database at a customer's facility.

Other data, for example, environmental data such as data related to temperature and/or humidity or information regarding the presence or absence of storms or other environmental events in a location of the facility in which the production entities being monitored or analyzed are located may also be provided to the computer system 600 to facilitate analysis of the data associated with the production entities and/or to facilitate determining an appropriate response. The environmental data may, in some embodiments, be provided along with data from the production entities, and in other embodiments, may be obtained from a separate system, for example, a weather reporting web site on the internet. In some embodiments, the computer system 600 may obtain geographic data regarding the location of the facility in which the production entities being monitored or analyzed is located and utilize this geographic data to look up the environmental data, for example, over the internet or from a weather reporting service. The computer system 600 may associate the environmental data with data regarding the energy intensity variation of the production entities.

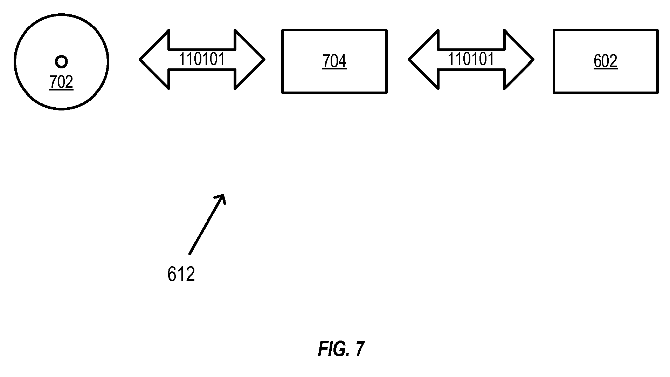

The storage system 612, shown in greater detail in FIG.7, typically includes a computer readable and writeable nonvolatile recording medium 702 in which signals are stored that define a program to be executed by the processor or information to be processed by the program. The medium may include, for example, a disk or flash memory. Typically, in operation, the processor causes data to be read from the nonvolatile recording medium 702 into another memory 704 that allows for faster access to the information by the processor than does the medium 702. This memory 704 is typically a volatile, random access integrated circuit memory such as a dynamic random access memory (DRAM) or static memory (SRAM). It may be located in storage system 612, as shown, or in memory system 604. The processor 602 generally manipulates the data within the integrated circuit memory 704 and then copies the data to the medium 702 after processing is completed. A variety of mechanisms are known for managing data movement between the medium 702 and the integrated circuit memory element 704, and embodiments disclosed herein are not limited to any particular data movement mechanism. Embodiments disclosed herein are not limited to a particular memory system 604 or storage system 612.

The computer system may include specially-programmed, special-purpose hardware, for example, an application-specific integrated circuit (ASIC). Embodiments disclosed herein may be implemented in software, hardware or firmware, or any combination thereof. Further, such methods, acts, systems, system elements and components thereof may be implemented as part of the computer system described above or as an independent component.

Although computer system 600 is shown by way of example as one type of computer system upon which various embodiments disclosed herein may be practiced, it should be appreciated that the embodiments disclosed herein are not limited to being implemented on the computer system as shown in FIG. 6. Various embodiments disclosed herein may be practiced on one or more computers having a different architecture or components that that shown in FIG. 6.

Computer system 600 may be a general-purpose computer system that is programmable using a high-level computer programming language. Computer system 600 may be also implemented using specially programmed, special purpose hardware. In computer system 600, processor 602 is typically a commercially available processor such as the well-known Pentium™ or Core™ class processors available from the Intel Corporation. Many other processors are available. Such a processor usually executes an operating system which may be, for example, the Windows 7 or Windows 8 operating system available from the Microsoft Corporation, the MAC OS System X available from Apple Computer, the Solaris Operating System available from Sun Microsystems, or UNIX available from various sources. Many other operating systems may be used.

The processor and operating system together define a computer platform for which application programs in high-level programming languages are written. It should be understood that embodiments disclosed herein are not limited to a particular computer system platform, processor, operating system, or network. Also, it should be apparent to those skilled in the art that the embodiments disclosed herein are not limited to a specific programming language or computer system. Further, it should be appreciated that other appropriate programming languages and other appropriate computer systems could also be used.

One or more portions of the computer system may be distributed across one or more computer systems (not shown) coupled to a communications network. These computer systems also may be general-purpose computer systems. For example, various embodiments disclosed herein may be distributed among one or more computer systems configured to provide a service (e.g., servers) to one or more client computers, or to perform an overall task as part of a distributed system. For example, various embodiments disclosed herein may be performed on a client-server system that includes components distributed among one or more server systems that perform various functions according to various embodiments. These components may be executable, intermediate (e.g., IL) or interpreted (e.g., Java) code which communicate over a communication network (e.g., the Internet) using a communication protocol (e.g., TCP/IP). In some embodiments one or more components of the computer system 600 may communicate with one or more other components over a wireless network, including, for example, a cellular telephone network.

It should be appreciated that embodiments disclosed herein are not limited to executing on any particular system or group of systems. Also, it should be appreciated that embodiments disclosed herein are not limited to any particular distributed architecture, network, or communication protocol. Various embodiments may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various embodiments disclosed herein may be implemented in a non-programmed environment (e.g., documents created in HTML, XML or other format that, when viewed in a window of a browser program, render aspects of a graphical-user interface (GUI) or perform other functions). Various embodiments disclosed herein may be implemented as programmed or non-programmed elements, or any combination thereof.

### Prophetic Example 1 - HVAC Energy Model Adjustment

As an example of an analysis engine in use, consider an office building including the system shown in FIG. 1. After running for a month, the analysis engine flags an increase in building energy use (vs. predicted) as an event. The engine finds that the energy increase is correlated with an increase in occupancy during non-office hours and a coincident scheduled meeting. The engine presents these findings to a user, who recognizes that a large company meeting took place during non-office hours. The user marks both correlations as valid and notes that the engine should treat this event as an exception. The engine creates an adjusted building energy use model for the duration of the meeting.

Based on data acquired during the training phase, the analysis service recognizes scheduled events as a potential energy driver, and that such events are normally correlated with a cooling setpoint value (which puts building temperature within a comfortable range for occupants). For the exception event described above, however, the cooling setpoint value was at a warmer level. The analysis engine suggests to the user that the cooling setpoint value be set to the "building occupied" comfort level during scheduled meetings, and the user accepts this suggestion. If the cooling setpoint value received by the analysis engine is not the "building occupied" comfort level when a meeting is scheduled, the analysis engine sends the "building occupied" comfort level to the BMS.

After running for two months, the analysis engine flags a decrease in HVAC energy use (vs. predicted) as an exception event. The engine finds that a change in the cooling setpoint and increase in zone temperature is correlated with this flagged event. The engine presents these findings to a user, who recognizes the increase in zone temperature as related to a recent BMS programming change. The user marks both correlations as valid and notes that the engine should treat this event as a permanent change. The engine creates an adjusted HVAC energy model for use from the time of the event onwards.

### Prophetic Example 2 - Root Cause Analysis

### Prior to Analysis Engine Implementation:

A facility manager notices that energy consumption has increased on weekends as compared to historical levels. The facility manager reviews logs in the facility EMS and finds that an air compressor associated with the facility HVAC system has been operating on the recent weekends. The facility manager consults with maintenance and production staff to determine why the compressor may have been operating on the recent weekends, for example, if there may have been an equipment problem such as a leak or sensor failure, or a facility process change. The facility manager learns that a new shift has started on weekends. The facility manager updates his ISO5001 reports to make note of this change and includes a note regarding this change in his next energy management report to the management of the facility.

### After Analysis Engine Implementation:

The analysis engine receives data from the facility EMS indicating that the air compressor associated with the facility HVAC system has been operating on the recent weekends. The analysis engine receives data regarding shift planning from the facility ERP/MES scheduling systems. The analysis engine receives data regarding access and occupancy changes from the facility security/BMS systems. The analysis engine receives data regarding new contractors having signed up in the HR administration database. The analysis engine correlates the events, updates that facility energy model to account for the received data, compares the normalized behavior to the updated model and determines that the observed behavior of the compressor is consistent with the updated model. The EMS system pulls the updated model from the analysis engine and includes the new shift in reports to the facility management. The analysis engine e-mails the facility manager to let him know about the change that he will see in the next energy consumption report.

### Prophetic Example 3 - Recognizing Shift Changes

The BMS of a facility shows a large number of people transferring in and out of the employee doors on a regular pattern. Five minutes after the people transfer in, the circuit loads feeding the employee change room increase and hot water flow to the change room increases. Ten minutes after the people transfer in, the equipment on the production line of the facility goes through a test cycle. The analysis engine recognizes a shift change from this data and links the shift change to specific employees based on employee IDs being registered at the facility security system as they enter the facility. The information regarding the shift change is provided to other facility systems, for example, the EMS to allocate energy to the active shift. The analysis engine adjusts setpoints of, for example, the facility HVAC and/or lighting systems to adjust the timing of their operations to match the requirements of the change in shift.

### Prophetic Example 4 - Recognizing New Tenant in Data Center

The analysis engine receives data from the EMS of a facility that the plug load monitoring of server racks in a data center of the facility shows a change in load pattern. The DCIM of the facility indicates to the analysis engine that sets of server racks in the data center were reconfigured. The CMS/TMS systems of the facility indicate to the analysis engine that a new customer has been brought online. The analysis engine determines that existing servers were repurposed for a new customer. The analysis engine adjusts parameters of, for example, the EMS related to energy tracking, alarming, etc., to account for the use of the servers by the new customer.

### Prophetic Example 5 - Security Risk Mitigation

The analysis engine monitors local crime statistics for an industrial park where an associated business has three buildings. The analysis engine receives data indicating declining economic data and an increase in incidences of crime in the area surrounding the industrial park. The analysis engine receives data from the security system of the business, from tracking of employee security badges that a number of women tend to work late at one of the buildings in the industrial park. The analysis engine instructs the security system to increase night-time lighting in parking lots associated with the building in the industrial park and to increase security patrols associated with the building. If the security system indicates that lighting in the parking lots is already operating at full capacity, the analysis engine makes a recommendation for purchase of additional lighting to management of the business.

### Prophetic Example 6 - Supplier Risk Mitigation

The analysis engine monitors business news and recognizes that a supplier of the business associated with the analysis engine is experiencing difficulties, for example, high attrition and/or legal issues. The analysis engine reduces the amount of supplies ordered from the vendor and reallocates purchases to another vendor and informs management of the business about the change in supplier risk.

### Prophetic Example 7 - Timing of Facility Lighting

The analysis engine initiates an instance of a lighting template to create a lighting model component. This model component has inputs from the BMS, calendar service, and EMS, and an output to the BMS (for lighting control). The BMS normally schedules lighting to be on during office hours and off during non-office hours. The lighting model component finds a correlation between scheduled meetings and lighting being on, and notices a meeting scheduled for non-office hours. The analysis engine sends an updated lighting schedule to the BMS so that the lights will not be switched off during the upcoming meeting. The analysis engine also adjusts the lighting model component models to take this change into account.

### Prophetic Example 8 - Optimization of HVAC Energy Consumption

The analysis engine initiates an instance of an HVAC template to create an HVAC model component. This template includes inputs for indoor and outdoor temperature, interval energy consumption, and BMS control parameters such as cooling setpoint and HVAC unit economizer status. This template also includes an output for HVAC unit economizer status. Past data collected shows a correlation between outdoor temperature and economizer status (on or off) for the indoor temperature range being maintained. The economizer status is normally "on," allowing the HVAC unit to use outdoor air for cooling when the outdoor temperature is cool. At some point in time, the analysis engine notes that the economizer status is "off" when outdoor temperatures are cool enough for it to operate, and also notes an increase in HVAC energy use. The analysis engine presents this result to a user and suggests switching economizer back on. The user concurs, and the analysis engine sends an economizer status of "on" to the BMS. The analysis engine also adjusts the HVAC model component models to take into account the time during which the economizer was off when it should have been on instead.

### Prophetic Example 9 - HVAC Energy Savings Investigation

The analysis engine has the ability to run tests with energy systems and measure the impact on energy consumption and costs. Consider an office building with an HVAC unit controlled by a BMS to maintain an indoor temperature of 20 degrees Celsius during office hours and 22 degrees Celsius during non-office hours. An HVAC model component receives temperature, cooling setpoint, occupancy and energy consumption data as inputs, and outputs cooling setpoint signals to the BMS. The HVAC model component operates as described previously, acquiring enough data to build baseline models. A user interested in testing the impact of raising the non-office hours setpoint directs the analysis engine to try indoor temperatures between 22 degrees Celsius and 24 degrees Celsius at half-degree increments. The analysis engine then sends different cooling setpoint values to the BMS during non-office hours, ensuring enough energy driver parameter data is collected at each test setpoint value to build a statistically significant model. Finally, the analysis engine presents the user with a report describing the impact the different cooling setpoint values have on energy consumption and cost.

### Prophetic Example 10 - Model Incorporating Inputs from MRP System

A facility includes an MRP system which receives orders and creates a schedule for producing and shipping the units ordered. As orders are received and fulfilled, an analysis engine associated with the facility tracks the correlation between the different stages of order fulfillment and its impact on energy systems at the facility. The MRP schedule of units produced in stages throughout the facility over time are received by the analysis engine as a set of [timestamp, unit volume, facility location] values. After finding correlations and updating models, the analysis engine has the ability to predict the impact on energy systems throughout the facility based on an order fulfillment schedule from the MRP system. If an unusually large order is received, the analysis engine can predict the resulting large increases in energy consumption over time and alert a user in advance.

A CRM system of the facility tracks a sales funnel of potential customer orders, with potential orders listed in the funnel as a unit volume, target date and confidence level of receiving the order. The analysis engine incorporates the confidence level in the model and reflects the resulting potential error in energy use predictions made.

### Prophetic Example 11 - Model Incorporating Inputs from Asset Management System

The analysis engine at a facility communicates with an asset management system of the facility. The asset management system tracks the age of equipment in the facility, manages maintenance schedules, etc. The analysis engine includes model templates for equipment in the facility that incorporate data from the asset management system to correlate the state of an asset (age, operating condition, etc.) with energy use. This refines the energy use models and allows the analysis engine to more accurately predict future energy use based on the maintenance state of equipment.

Having thus described several aspects of at least one embodiment of this invention, it is to be appreciated various alterations, modifications, and improvements will readily occur to those skilled in the art. For example, although the examples provided herein focus on energy analysis, this same approach could be used for example, to identify high cost events associated with parameters other than energy. Interval data for billable parameters (consumption, peak demand, power factor, etc.) can be combined to generate interval cost values, and the methods disclosed herein can be used to find and target high-cost events. Any feature described in any embodiment may be included in or substituted for any feature of any other embodiment. Acts of methods disclosed herein may be performed in alternate orders, and one or more of the acts may be omitted or replaced by an alternative act. The methods disclosed herein may include additional acts not explicitly described. Such alterations, modifications, and improvements are intended to be part of this disclosure, and are intended to be within the scope of the invention. Accordingly, the foregoing description and drawings are by way of example only.

## Claims

1. A system comprising:
an analysis engine including at least one input and at least one output and configured to:
create instances of predefined model templates to model the activity of energy equipment in a facility, different equipment types being represented by different templates, the templates defining one or more of input energy use, energy drivers, and/or control parameters for the respective equipment types;
receive, through the at least one input, data from other information technology (IT) systems of the facility related to the one or more of input energy use, energy driver, and/or control parameters for the respective equipment types;
find correlations between the input parameters of energy use, energy drivers, and control parameters of the different equipment types and develop one or more energy models predicting energy use of the different equipment types based on the energy drivers and control parameters;
compare the data received from the other IT systems and energy consumption of the energy equipment to the one or more models to determine if an energy system anomaly has occurred; and
output, through the at least one output, one or more control signals to control operation of the energy equipment responsive to a determination that an energy system anomaly has occurred.

2. The system of claim 1, wherein the analysis engine is configured to flag an instance of an event not predicted by the one or more models and present an indication of correlations between energy use of equipment associated with the event and the energy drivers and control parameters of the equipment to a user.

3. The system of claim 2, wherein the analysis engine is configured to receive feedback from the user that (a) confirms whether or not the correlations presented are valid; and (b) provides an indication of steps the analysis engine should take to account for the event, wherein the steps the analysis engine should take include one of adjusting the model for the equipment for just the instance of the event and updating the model for the equipment to indicate a permanent change to the correlations between the energy use of equipment and the energy drivers and control parameters of the equipment based on data associated with the instance of the event.

4. The system of claim 2 or 3, wherein the analysis engine is configured to suggest actions to bring equipment operation back into a range predicted by the one or more models and to receive input from the user accepting or declining implementation of the actions.

5. The system of any preceding claim, wherein the analysis engine is configured output one or more signals through the one or more outputs that implement one or more actions to bring equipment operation back into a range predicted by the one or more models responsive to detecting an instance of an event not predicted by the one or more models.

6. The system of any preceding claim, wherein the analysis engine is configured, after initial installation, to enter a training phase in which it queries a network of the facility to determine the different equipment types present in the facility and the other IT systems present in the facility.

7. The system of any preceding claim, wherein the analysis engine is configured to receive data from the internet including one or more of weather, financial, and security related data, and to incorporate the data from the internet into the one or more energy models.

8. The system of any preceding claim, wherein the analysis engine is configured to receive data from one or more temperature and/or lighting sensors of the facility and to incorporate the data from the one or more temperature and/or lighting sensors into the one or more energy models.

9. The system of any preceding claim, wherein the other IT systems of the facility include one or more of an enterprise resource planning systems, a calendar service, an energy monitoring system, a manufacturing execution system, a data center infrastructure management system, a finance system, a supervisory control and data acquisition system, a customer relationship management system, a transportation management system, a human resource system, and an enterprise asset management system.

10. The system of any preceding claim, further comprising a second analysis engine associated with a second facility and in communication with the analysis engine, the analysis engine and the second analysis engine configured to cooperate to determine actions to improve operation of the energy equipment.

11. The system of any preceding claim, wherein the analysis engine is further configured to predict future energy system anomalies and take action to prevent the future energy system anomalies.

12. A method comprising:
installing an energy analysis engine in a computer system in communication with a facility network, the energy analysis engine configured to:
identify one or more enterprise systems installed on the network;
access data feeds from the one or more enterprise systems;
identify one or more facility energy driver parameters represented in the data feeds from the one or more enterprise systems;
build an energy model correlating the one or more facility energy driver parameters with facility energy consumption; and
provide one or more control commands to the one or more enterprise systems responsive to a detected change in a correlation between the one or more facility energy driver parameters and the facility energy consumption, the one or more control commands causing an adjustment to be made to one or more operating parameters of one or more energy consuming and/or producing devices at the facility.

13. The method of claim 12, wherein the energy analysis engine updates the energy model in response to a change in a determined correlation between the one or more facility energy driver parameters and the facility energy consumption and automatically updates the one or more operating parameters of the one or more energy consuming and/or producing devices at the facility responsive to the update to the energy model.

14. The method of claim 12 or 13, wherein the energy analysis engine automatically discovers new energy consumption drivers for the facility energy consumption and automatically incorporates the new energy consumption drivers into the energy model.

15. The method of claim 12, 13 or 14 wherein the energy analysis engine monitors one of a security system and a calendar service of the facility and provides the one or more control commands response to a determination of a change in an occupancy pattern of the facility based on data from the one of the security system and the calendar service.
